# EUROPEAN PATENT APPLICATION

(11) **EP 4 224 937 A1**
(43) Date of publication of application: **09.08.2023**
(21) Application number: 21874327.6
(22) Date of filing: 23.09.2021
(51) Int. Cl.: H04W 40/10

(54) **SERVICE-BASED RELAY SELECTION METHOD AND RELATED PRODUCT**

(30) Priority: 30.09.2020 CN 202011069937
(71) Applicant: Spreadtrum Communications (Shanghai) Co., Ltd., Shanghai 201203 (CN)
(72) Inventor: LIU, Xing, Shanghai 201203 (CN)
(74) Representative: Mewburn Ellis LLP
(86) International application number: PCT/CN2021/119898
(87) International publication number: WO 2022/068666

(57) **Abstract**

A service-based relay selection method and related products are provided in implementations of the disclosure. The method is applied to a terminal device. The method includes: determining, by the terminal device, whether a service needs uplink transmission when determining that the terminal device has an energy-saving requirement; and triggering, by the terminal device, relay selection when determining that the service needs uplink transmission. The technical solution of the disclosure has an advantage of improving a network performance.

## Description

### TECHNICAL FIELD

This application relates to the field of communication processing technology, and particularly to a service-based relay selection method and related products.

### BACKGROUND

Multimedia broadcast/multicast service (MBMS) is introduced in 3GPP to effectively utilize mobile communication network resources. The MBMS provides in a mobile communication network a point-to-multipoint service in which a data source transmits data to multiple users, to realize network resource sharing and improve resource utilization, especially air interface resources.

In order to increase transmission coverage or reduce a transmitting power of a terminal device, a relay can be introduced between a transmitter and a receiver. The relay can forward data received from the transmitter to the receiver, thereby expanding transmission coverage of the transmitter. As an example, in a cellular system, a relay is responsible for forwarding data of a user equipment (UE) to a base station, or forwarding data of the base station to the UE.

No suitable solution regarding relay selection is provided for an existing terminal device, which affects a network performance.

### SUMMARY

Implementations of the disclosure provide a service-based relay selection method and related products, relay selection is performed when determining that a service needs uplink transmission and a terminal has an energy-saving requirement, which can improve a network performance.

In a first aspect, a service-based relay selection method is provided. The method is applied to a terminal device. The method includes: determining, by the terminal device, whether a service needs uplink transmission when determining that the terminal device has an energy-saving requirement; and triggering, by the terminal device, relay selection when determining that the service needs uplink transmission.

In a second aspect, a user equipment is provided. The user equipment includes a processing unit. The processing unit is configured to determine whether a service needs uplink transmission when determining that there is an energy-saving requirement, and trigger relay selection when determining that the service needs uplink transmission.

In a third aspect, a relay device is provided. The relay device includes a processor, a memory, a communication interface, and one or more programs. The one or more programs are stored in the memory and configured to be executed by the processor. The programs include instructions which are operable to execute the operations of the method in the first aspect.

In a fourth aspect, a computer-readable storage medium is provided. The computer-readable storage medium stores computer programs for electronic data interchange. The computer programs are operable with a computer to execute the method in the first aspect.

In a fifth aspect, a computer program product is provided. The computer program product includes a non-transitory computer-readable storage medium storing computer programs. The computer programs are operable with a computer to execute all or part of the operations in the first aspect of implementations of the disclosure. The computer program product may be a software installation package.

In a sixth aspect, a chip system is provided. The chip system includes at least one processor, at least one memory, and an interface circuit. The memory, a transceiver, and the at least one processor are interconnected through lines. The at least one memory stores computer programs which, when executed by the processor, are operable to execute the method in the first aspect.

According to technical solutions of the disclosure, the terminal device determines whether the service needs uplink transmission when determining that there is the energy-saving requirement. The terminal device triggers relay selection when uplink transmission is needed, that is, uplink transmission is performed through a relay. As such, the energy-saving requirement of the terminal device can be realized effectively. Since a battery capacity of a device (e.g., a smart watch) with the energy-saving requirement is generally small, if the device is close to a relay device (e.g., a smart phone) during uplink transmission, uplink transmission data can be transmitted to a base station with less power consumption, thereby achieving energy saving for the terminal device. Since the capability of the relay device is generally greater than that of the terminal device with the energy-saving requirement, a network performance can also be improved.

### BRIEF DESCRIPTION OF THE DRAWINGS

The following will give a description of accompanying drawings used for describing implementations of disclosure.
FIG. 1a is a system architecture diagram of an exemplary communication system.
FIG. 1b is a schematic diagram illustrating a network architecture of a communication system.
FIG. 1c is a schematic diagram illustrating another network architecture of a communication system.
FIG. 1d is a schematic diagram illustrating another network architecture of a communication system.
FIG. 2 is a schematic flowchart illustrating a service-based relay selection method provided in the disclosure.
FIG. 3 is a schematic flowchart illustrating a service-based relay selection method provided in the first implementation of the disclosure.
FIG. 4 is a schematic flowchart illustrating a service-based relay selection method provided in the second implementation of the disclosure.
FIG. 5 is a schematic flowchart illustrating a service-based relay selection method provided in the third implementation of the disclosure.
FIG. 6 is a schematic structural diagram illustrating a user equipment (UE) provided in implementations of the disclosure.
FIG. 7 is a schematic structural diagram illustrating an electronic device provided in implementations of the disclosure.

### DETAILED DESCRIPTION

Hereinafter, implementations of the disclosure are depicted with reference to accompanying drawings used for the implementations of the disclosure.

The term "and/or" of the disclosure is merely used to describe an association relationship of associated objects, and indicates that there can be three relationships. For example, *"A* and/or *B*" means that: *A* alone, both *A* and *B,* or *B* alone. In addition, the character "/" herein generally indicates that associated objects before and after the character are in an "or" relationship.

The term "a plurality of/multiple" appearing in implementations of the disclosure means two or more. The descriptions of the "first", "second", and the like appearing in implementations of the disclosure are merely used for illustration and distinguishing described objects, and do not indicate an order, nor do they indicate a special limitation on the number of devices of implementations of the disclosure, which should not constitute any limitation to implementations of the disclosure. The "connection" appearing in implementations of the disclosure refers to various connection modes such as direct connection or indirect connection, to realize communication between devices, which is not limited in implementations of the disclosure.

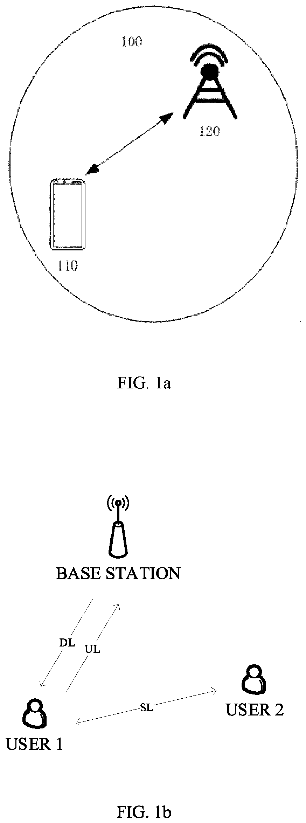

Technical solutions of implementations of the disclosure can be applied to an exemplary communication system 100 illustrated in FIG. 1a. The communication system 100 includes a terminal 110 and a network device 120. The terminal 110 is communicatively connected to the network device 120.

The communication system 100 may be, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U), an NRbased access to unlicensed spectrum (NR-U), a universal mobile telecommunication system (UMTS), a next generation communication system or other communication systems, etc.

Generally, the number of connections supported by a traditional communication system is limited, and the traditional communication system is also easy to implement. However, with development of communication technology, the mobile communication system will not only support traditional communication, but also support, for example, device to device (D2D) communication, machine to machine (M2M) communication, machine type communication (MTC), and vehicle to vehicle (V2V) communication, etc., and implementations of the disclosure may also be applied to these communication systems. Optionally, the communication system of implementation of the disclosure may be applied to a carrier aggregation (CA) scenario, a dual connectivity (DC) scenario, or a standalone (SA) network deployment scenario.

The terminal 110 of implementations of the disclosure may refer to user equipment (UE), an access terminal, a subscriber unit, a subscriber station, a mobile station, a remote station, a remote terminal, mobile equipment, a user terminal, terminal equipment, wireless communication equipment, a user agent, or a user device. The terminal may also be a cellular phone, a cordless phone, a session initiation protocol (SIP) phone, a wireless local loop (WLL) station, a personal digital assistant (PDA), a handheld device with a wireless communication function, a computing devices, or other processing devices coupled with a wireless modem, a relay device, an in-vehicle device, a wearable device, a terminal in a future 5G network or a future evolved public land mobile network (PLMN), etc., which is not limited in implementations of the disclosure.

The network device 120 of implementations of the disclosure may be a device for communicating with a terminal. The network device may be an evolved NodeB (eNB or eNodeB) in an LTE system, or a wireless controller in a cloud radio access network (CRAN) scenario, or the network device may be a relay device, an access point (AP), a vehicle device, a wearable device, a network device in a future 5G network or in a future evolved PLMN, one or a group (including multiple antenna panels) of antenna panels of a base station in a 5G system, or the network device may also be a network node that constitutes a gNodeB (gNB) or a transmission point, such as a baseband unit (BBU), a distributed unit (DU), or the like, which is not limited in implementations of the disclosure.

In some deployments, a gNB may include a centralized unit (CU) and a DU. The gNB may also include an active antenna unit (AAU). The CU is configured to implement some functions of the gNB, while the DU is configured to implement some other functions of the gNB. As an example, the CU is responsible for processing non-real-time protocols and services, and realizing functions of radio resource control (RRC) and a packet data convergence protocol (PDCP) layer. The DU is responsible for processing physical layer protocols and real-time services, and realizing functions of a radio link control (RLC) layer, a media access control (MAC) layer, and a physical (PHY) layer.

Referring to the network architecture illustrated in FIG. 1b, thing-to-thing direct communication technology or sidelink (SL) communication technology is a communication technology that is different from ordinary wireless cellular network communication. In a traditional cellular network, a UE (also called "terminal device") communicates with a base station. In this situation, a link between the UE and the base station is called an uplink or a downlink, and a corresponding interface is called a Uu interface. In the thing-to-thing direct communication, a UE directly communicates with another UE, a link between the two UEs is called a sidelink (SL), and a corresponding interface is called a PC5 interface.

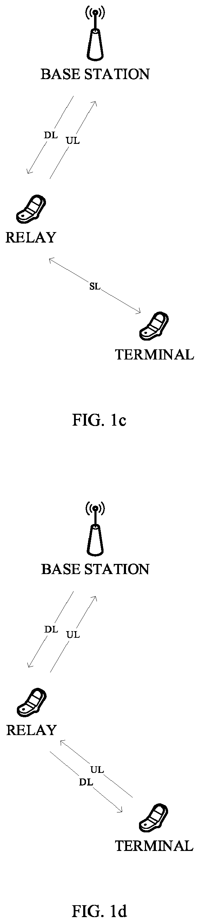

The introduction of the sidelink was originally to realize direct communication between closer users, so that data does not need to be forwarded by the base station, which can reduce transmission delay. Later, sidelink relay is designed on the basis of the introduction of the sidelink. The sidelink relay means that a link between a relay and a UE adopts sidelink technology (as illustrated in FIG. 1c), alternatively, a relay uses uplink and downlink technology between the relay and a UE (as illustrated in FIG. 1d).

A relay is generally used to forward unicast data. Unicast data is data of which a target receiving user is an intended single user. However, the relay can also be used to forward multicast data. Multicast data is data of which a target receiving user is a group of users interested in a multicast service. For example, TV is a multicast service. A TV signal is transmitted continuously, the TV signal can be received as long as the TV is turned on, and all turned-on TVs can receive the same TV signal.

Generally, no matter whether a terminal device receives a multicast service from a base station directly or receives the multicast service from the base station via a relay, power consumption should be similar, because the terminal device only performs a receiving action. The sidelink is enhanced. In the sidelink, a hybrid automatic repeat request (HARQ) feedback can be performed on transmitted data, including multicast data. As an example, when a terminal transmits multicast data to a group of terminals, this group of terminals can choose to feedback ACK (success) or NACK (failure) according to whether the data is received successfully. If any terminal fails to receive the data, a transmitter will retransmit the data. Whether the HARQ feedback is required depends on attribute of the service. For instance, for a service with a high reliability requirement, the HARQ feedback is required. Considering that the terminal device is to provide feedback on the multicast service, a transmitting power of the terminal device must be increased, so as to complete direct communication with the base station.

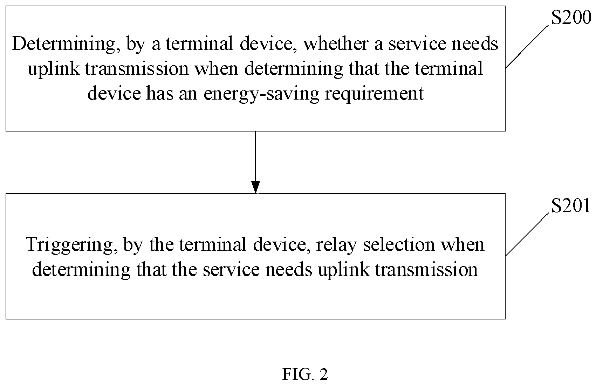

Referring to FIG. 2, FIG. 2 illustrates a service-based relay selection method. The method can be executed under the network architecture illustrated in FIG. 1c or FIG. 1d. The method is executed by a terminal. As illustrated in FIG. 2, the method includes the following.

At S200, a terminal device determines whether a service needs uplink transmission when determining that the terminal device has an energy-saving requirement.

At S201, the terminal device triggers relay selection when determining that the service needs uplink transmission.

According to technical solutions of the disclosure, the terminal device determines whether the service needs uplink transmission when determining that there is the energy-saving requirement. The terminal device triggers relay selection when uplink transmission is needed, that is, uplink transmission is performed through a relay. As such, the energy-saving requirement of the terminal device can be realized effectively. Since a battery capacity of a device (e.g., a smart watch) with the energy-saving requirement is generally small, if the device is close to a relay device (e.g., a smart phone) during uplink transmission, uplink transmission data can be transmitted to a base station with less power consumption, thereby achieving energy saving for the terminal device. Since the capability of the relay device is generally greater than that of the terminal device with the energy-saving requirement, a network performance can also be improved.

In an optional implementation, determining that the terminal device has the energy-saving requirement includes: receiving, by the terminal device, control information transmitted by a network device, where the control information contains configuration information for the energy-saving requirement; determining, by the terminal device, whether the configuration information for the energy-saving requirement is matched; determining, by the terminal device, that the terminal device has the energy-saving requirement, when the configuration information for the energy-saving requirement is matched; or determining, by the terminal device, that the terminal device has no energy-saving requirement, when the configuration information for the energy-saving requirement is not matched.

In an optional implementation, prior to triggering, by the terminal device, relay selection, the method further includes: receiving, by the terminal device, control information transmitted by a network device, where the control information contains configuration information for relay selection; and triggering, by the terminal device, relay selection according to the configuration information for relay selection.

In an optional implementation, the configuration information for relay selection contains resource information for relay selection or a period of relay selection. If there is the configuration information, the terminal device will perform periodic relay selection according to the period. The period is greater than a period corresponding to a terminal device without the energy-saving requirement, which can reduce the number of times of relay selection and is beneficial to realizing the energy-saving requirement of the terminal device.

In an optional implementation, the control information includes system information or dedicated RRC signaling.

In an optional implementation, prior to triggering, by the terminal device, relay selection, the method further includes: triggering, by the terminal device, relay selection when determining that a channel condition between the terminal device and a network device does not meet a preset condition; or triggering, by the terminal device, relay selection when determining that the terminal device is outside a signal coverage of the network device.

In an optional implementation, triggering, by the terminal device, relay selection specifically includes: selecting, by the terminal device, a relay for uplink transmission.

In an optional implementation, determining whether the service needs uplink transmission specifically includes: determining that the service needs uplink transmission if the service is a unicast service; or determining that the service needs uplink transmission if the service is a multicast service requiring a HARQ feedback.

### The first implementation

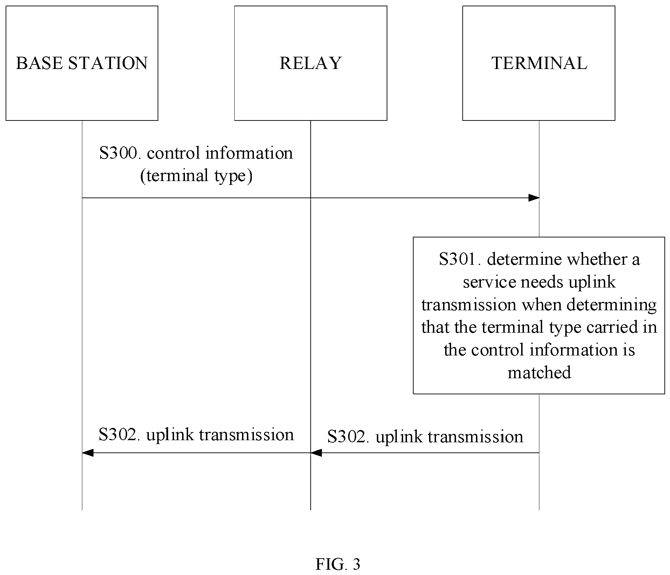

The first implementation of the disclosure provides a service-based relay selection method. The method is implemented under the architecture illustrated in FIG. 1c or FIG. 1d. As illustrated in FIG. 3, the method includes the following.

At S300, a base station transmits control information to a terminal, where the control information carries a type of a terminal with an energy-saving requirement.

The above control information includes, but is not limited to, system message or dedicated RRC signaling.

At S301, the terminal receives the control information, and determines whether a service needs uplink transmission when determining that the type of the terminal (i.e., terminal type) carried in the control information is matched with that of this terminal.

At S302, the terminal selects a relay for uplink transmission when determining that uplink transmission is needed.

According to technical solutions of the disclosure, the terminal device determines whether the service needs uplink transmission when determining that there is the energy-saving requirement according to the control information transmitted by the base station. The terminal device triggers relay selection when uplink transmission is needed, that is, uplink transmission is performed through a relay. As such, the energy-saving requirement of the terminal device can be realized effectively. Since a battery capacity of a device (e.g., a smart watch) with the energy-saving requirement is generally small, if the device is close to a relay device (e.g., a smart phone) during uplink transmission, uplink transmission data can be transmitted to the base station with less power consumption, thereby achieving energy saving for the terminal device. Since the capability of the relay device is generally greater than that of the terminal device with the energy-saving requirement, a network performance can also be improved.

### The second implementation

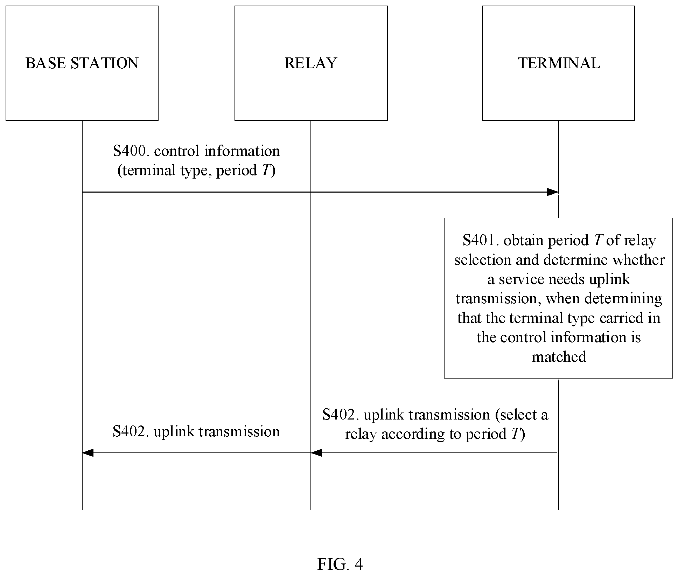

The second implementation of the disclosure provides a service-based relay selection method. The method is implemented under the architecture illustrated in FIG. 1c or FIG. 1d. As illustrated in FIG. 4, the method includes the following.

At S400, a base station transmits control information to a terminal, where the control information carries a period T of relay selection and a type of a terminal with an energy-saving requirement.

The above control information includes, but is not limited to, system message or dedicated RRC signaling.

At S401, the terminal receives the control information, and obtains the period T of relay selection and determines whether a service needs uplink transmission when determining that the type of the terminal carried in the control information is matched with that of this terminal.

At S402, the terminal selects, according to the period T, a relay for uplink transmission when determining that uplink transmission is needed.

According to technical solutions of the disclosure, when determining that there is the energy-saving requirement according to the control information transmitted by the base station, the terminal device determines the period T according to the control information, and determines whether the service needs uplink transmission. The terminal device triggers, according to the period *T*, relay selection when uplink transmission is needed, that is, a relay is selected periodically for uplink transmission according to the period T. As such, the energy-saving requirement of the terminal device can be realized effectively. Since a battery capacity of a device (e.g., a smart watch) with the energy-saving requirement is generally small, if the device is close to a relay device (e.g., a smart phone) during uplink transmission, uplink transmission data can be transmitted to the base station with less power consumption, thereby achieving energy saving for the terminal device. Since the capability of the relay device is generally greater than that of the terminal device with the energy-saving requirement, a network performance can also be improved.

### The third implementation

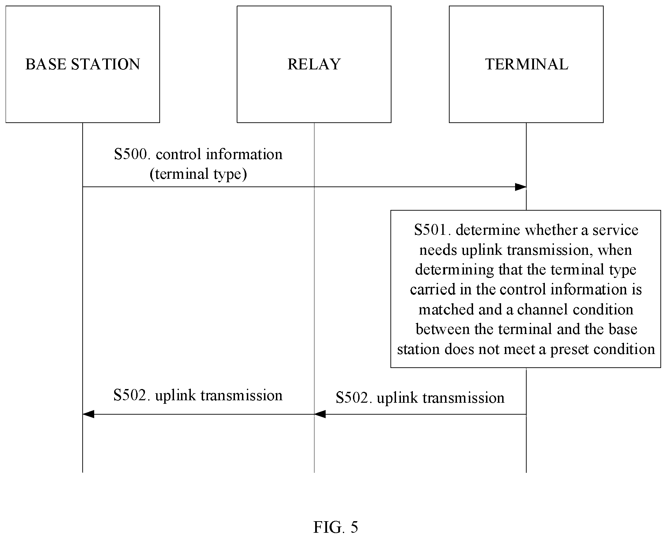

The third implementation of the disclosure provides a service-based relay selection method. The method is implemented under the architecture illustrated in FIG. 1c or FIG. 1d. As illustrated in FIG. 5, the method includes the following.

At S500, a base station transmits control information to a terminal, where the control information carries a type of a terminal with an energy-saving requirement.

The above control information includes, but is not limited to, system message or dedicated RRC signaling.

At S501, the terminal receives the control information, and triggers relay selection when determining that the type of the terminal carried in the control information is matched with that of this terminal and determining that a channel condition between the terminal and the base station does not meet a preset condition or the terminal is outside a signal coverage of the base station.

The channel condition does not meet the preset condition if the channel condition between the terminal (device) and the base station does not meet a second threshold. A difference between the second threshold and a first threshold (a value of a channel condition when the terminal device is far away from the base station, such as in an edge area) is that the second threshold can be set to be greater than the first threshold. When determining that the terminal device is very close to the base station (e.g., in a middle area), that is, a signal quality is greater than the second threshold, the terminal device can choose to communicate with the base station directly. The first threshold means that the signal quality is not very good although the terminal device is still in the coverage of the base station, that is, the terminal is in the edge area.

At S502, the terminal selects a relay for uplink transmission when determining that uplink transmission is needed.

According to technical solutions of the disclosure, the terminal device determines whether the service needs uplink transmission when determining that there is the energy-saving requirement according to the control information transmitted by the base station. The terminal device selects the relay for uplink transmission when uplink transmission is needed. As such, the energy-saving requirement of the terminal device can be realized effectively. Since a battery capacity of a device (e.g., a smart watch) with the energy-saving requirement is generally small, if the device is close to a relay device (e.g., a smart phone) during uplink transmission, uplink transmission data can be transmitted to the base station with less power consumption, thereby achieving energy saving for the terminal device. Since the capability of the relay device is generally greater than that of the terminal device with the energy-saving requirement, a network performance can also be improved.

It can be understood that, in order to implement the above functions, the UE includes software modules and/or hardware corresponding to the respective functions. In combination with algorithm steps/operations of each example described in the implementations disclosed herein, the disclosure can be implemented in hardware or a combination of hardware and computer software. Whether a function is implemented by way of hardware or computer software driving hardware depends on particular application and design constraints of the technical solution. Those skilled in the art may use different methods to implement the described functions for each particular application, but such implementation should not be considered as beyond the scope of the disclosure.

According to implementations of the disclosure, functional modules/units may be divided for an electronic device in accordance with the foregoing method examples. For example, functional units may be divided according to corresponding functions, and two or more functions may be integrated into one processing unit. The above-mentioned integrated unit can be implemented in the form of hardware. It should be noted that, the division of units in implementations of the disclosure is schematic and is merely a logical function division; there may be other division manners in actual implementation.

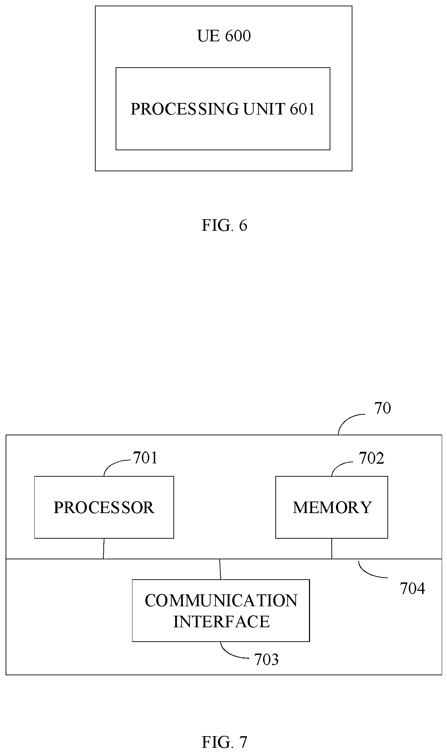

In the case of dividing functional units according to respective functions, FIG. 6 is a schematic diagram of a UE. As illustrated in FIG. 6, a UE 600 includes a processing unit 601. The processing unit 601 can be used to support the UE to execute the operations at 200 and S201, etc., and/or execute other processes of the technical solutions described herein.

It should be noted that, all relevant contents of the operations in the foregoing method implementations can be cited for the description of functions of corresponding function units, which will not be repeated herein.

In the case of adopting an integrated unit, a UE may include a processing unit, a storage unit, and a communication unit. The processing unit is configured to control and manage actions of the UE, for example, to support the UE to perform the operations performed by the processing unit. The storage unit is configured to support an electronic device to execute program codes and data stored, and the like. The communication module is configured to support communication between the UE and other devices.

The processing unit may be a processor or a controller. The processing unit can implement or perform various exemplary logic blocks, modules/units, and circuits described in conjunction with disclosed contents of the disclosure. The processor may also be a combination of computing functions, for instance, a combination of one or more microprocessors, a combination of digital signal processing (DSP) and a microprocessor, etc. The storage unit may be a memory. Specifically, the communication unit may be a device that interacts with other electronic devices, such as a radio frequency circuit, a Bluetooth chip, and a Wi-Fi chip.

It can be understood that, interface connection relationships between modules illustrated in implementation of the disclosure are only schematic illustration, and do not constitute a structural limitation on the UE. In other implementations of the disclosure, the UE may also adopt different interface connection modes in the foregoing implementations, or a combination of multiple interface connection modes.

Referring to FIG. 7, FIG. 7 illustrates an electronic device 70 provided in implementations of the disclosure. The electronic device 70 includes a processor 701, a memory 702, and a communication interface 703. The processor 701, the memory 702, and the communication interface 703 are connected to each other through a bus 704.

The memory 702 may include, but is not limited to, a random access memory (RAM), a read-only memory (ROM), an erasable programmable ROM (EPROM), or a compact disc ROM (CD-ROM). The memory 702 is configured to store related computer programs and data. The communication interface 703 is configured to receive and transmit data.

The processor 701 may be one or more central processing units (CPU). If the processor 701 is one CPU, the CPU may be a single-core CPU or a multi-core CPU.

The processor 701 may include one or more processing units. For example, the processing unit may include an application processor (AP), a modem processor, a graphics processing unit (GPU), an image signal processor (ISP), a controller, a video codec, a digital signal processor (DSP), a baseband processor, and/or a neural-network processing unit (NPU), etc. Different processing units may be independent components, and may also be integrated in one or more processors. In some implementations, the UE may also include one or more processing units. The controller can be configured to generate an operation control signal according to an instruction operation code and a timing signal, and complete control of fetching and executing an instruction. In other implementations, a memory may also be provided in the processing unit for storing instructions and data. Exemplarily, the memory in the processing unit may be a cache memory. The memory can hold instructions or data that have just been used or recycled by the processing unit. If the processing unit needs to use the instruction or data again, the instruction or data can be called directly from the memory. As such, repeated access can be avoided, and the waiting time of the processing unit can be reduced, thereby improving an efficiency of the UE in processing data or executing instructions.

In some implementations, the processor 701 may include one or more interfaces. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a generalpurpose input/output (GPIO) interface, an SIM card interface and/or a USB interface, etc. The USB interface is an interface conforming to the USB standard specification. Specifically, the USB interface may be a Mini USB interface, a Micro USB interface, a USB Type C interface, etc. The USB interface may be used to connect a charger to charge the UE, and can also be used to transmit data between the UE and peripheral equipment. The USB interface can also be used to connect a headset and play audio through the headset.

The processor 701 of the electronic device 70 is configured to read computer program codes stored in the memory 702 and perform: determining whether a service needs uplink transmission when determining that there is an energy-saving requirement, and triggering relay selection when determining that the service needs uplink transmission.

All relevant contents of scenarios involved in the foregoing method implementations can be cited for the description of functions of corresponding function units, which will not be repeated herein.

Implementations of the disclosure further provide a chip system. The chip system includes at least one processor, at least one memory, and an interface circuit. The memory, a transceiver, and the at least one processor are interconnected through wires. The at least one memory stores computer programs which, when executed by the processor, are operable to execute the method flow illustrated in FIG. 2, FIG. 3, FIG. 4, and FIG. 5.

Implementations of the disclosure further provide a computer-readable storage medium. The computer-readable storage medium stores computer programs which, when run on a network device, are operable to execute the method flow illustrated in FIG. 2, FIG. 3, FIG. 4, and FIG. 5.

Implementations of the disclosure further provide a computer program product. The computer program product, when run on a terminal, is operable to execute the method flow illustrated in FIG. 2, FIG. 3, FIG. 4, and FIG. 5.

Implementations of the disclosure further provide a relay device. The relay device includes a processor, a memory, a communication interface, and one or more programs. The one or more programs are stored in the memory and configured to be executed by the processor. The program includes instructions which are operable to execute the operations in the method of the implementations illustrated in FIG. 2, FIG. 3, FIG. 4, and FIG. 5.

The foregoing technical solutions of the implementations of the disclosure are mainly described from the viewpoint of execution of the method. It can be understood that, in order to implement the above functions, the electronic device includes hardware structures and/or software modules corresponding to the respective functions. Those skilled in the art should readily recognize that, in combination with the exemplary units and scheme steps/operations described in the implementations disclosed herein, the disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the disclosure.

According to the implementations of the disclosure, functional units may be divided for the electronic device in accordance with the foregoing method examples. As an example, functional units may be divided according to corresponding functions, and two or more functions may be integrated into one processing unit. The above-mentioned integrated unit can be implemented in the form of hardware or software functional units. It should be noted that, the division of units in implementations of the disclosure is schematic and is merely a logical function division; there may be other division manners in actual implementation.

It is to be noted that, for the sake of simplicity, the foregoing method implementations are described as a series of action combinations, however, it will be appreciated by those skilled in the art that the disclosure is not limited by the sequence of actions described. That is because that, according to the disclosure, certain steps/operations may be performed in other order or simultaneously. Besides, it will be appreciated by those skilled in the art that the implementations described in the specification are exemplary implementations and the actions and modules/units involved are not necessarily essential to the disclosure.

In the foregoing implementations, the description of each implementation has its own emphasis. For the parts not described in detail in one implementation, reference may be made to related descriptions in other implementations.

In the implementations of the disclosure, it should be understood that, the apparatus/ equipment/ device disclosed in implementations provided herein may be implemented in other manners. For example, the device implementations described above are merely illustrative; for instance, the division of units is only a logical function division and there can be other manners of division during actual implementations, for example, multiple units or assemblies may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product. The computer software product is stored in a memory and includes instructions for causing a computer device (which may be a personal computer, a server, or a network device and so on) to perform all or part of the operations of the method described in the various implementations of the disclosure. The memory may include various medium capable of storing program codes, such as a universal serial bus (USB), a ROM, a RAM, a removable hard disk, Disk, CD, or the like.

It will be understood by those of ordinary skill in the art that all or part of the operations of the method of the various implementations described above may be accomplished by means of a program to instruct associated hardware, the program may be stored in a computer-readable memory. The memory may include a flash memory, a ROM, a RAM, Disk or CD, and so on.

## Claims

1. A service-based relay selection method, applied to a terminal device and comprising:
determining, by the terminal device, whether a service needs uplink transmission when determining that the terminal device has an energy-saving requirement; and
triggering, by the terminal device, relay selection when determining that the service needs uplink transmission.

2. The method of claim 1, wherein determining that the terminal device has the energy-saving requirement comprises:
receiving, by the terminal device, control information transmitted by a network device, wherein the control information contains configuration information for the energy-saving requirement;
determining, by the terminal device, whether the configuration information for the energy-saving requirement is matched;
determining, by the terminal device, that the terminal device has the energy-saving requirement, when the configuration information for the energy-saving requirement is matched; or
determining, by the terminal device, that the terminal device has no energy-saving requirement, when the configuration information for the energy-saving requirement is not matched.

3. The method of claim 1, wherein prior to triggering, by the terminal device, relay selection, the method further comprises:
receiving, by the terminal device, control information transmitted by a network device, wherein the control information contains configuration information for relay selection; and
triggering, by the terminal device, relay selection according to the configuration information for relay selection.

4. The method of claim 3, wherein the configuration information for relay selection contains resource information for relay selection or a period of relay selection.

5. The method of any of claims 2 to 4, wherein the control information comprises system information or dedicated radio resource control, RRC, signaling.

6. The method of claim 1, wherein prior to triggering, by the terminal device, relay selection, the method further comprises:
triggering, by the terminal device, relay selection when determining that a channel condition between the terminal device and a network device does not meet a preset condition; or
triggering, by the terminal device, relay selection when determining that the terminal device is outside a signal coverage of the network device.

7. The method of any of claims 1 to 6, wherein triggering, by the terminal device, relay selection comprises:
selecting, by the terminal device, a relay for uplink transmission.

8. The method of any of claims 1 to 6, wherein determining whether the service needs uplink transmission comprises:
determining that the service needs uplink transmission when the service is a unicast service; or
determining that the service needs uplink transmission when the service is a multicast service requiring a hybrid automatic repeat request, HARQ, feedback.

9. A user equipment, comprising:
a processing unit, configured to determine whether a service needs uplink transmission when determining that there is an energy-saving requirement, and trigger relay selection when determining that the service needs uplink transmission.

10. The user equipment of claim 9, further comprising:
a communication unit, configured to receive control information transmitted by a network device, wherein the control information contains configuration information for the energy-saving requirement;
the processing unit being configured to determine whether the configuration information for the energy-saving requirement is matched, determine that there is the energy-saving requirement when the configuration information for the energy-saving requirement is matched, or determine that there is no energy-saving requirement when the configuration information for the energy-saving requirement is not matched.

11. The user equipment of claim 9, further comprising:
a communication unit, configured to receive control information transmitted by a network device, wherein the control information contains configuration information for relay selection;
the processing unit being configured to trigger relay selection according to the configuration information for relay selection.

12. The user equipment of claim 11, wherein the configuration information for relay selection contains resource information for relay selection or a period of relay selection.

13. The user equipment of any of claims 10 to 12, wherein the control information comprises system information or dedicated radio resource control, RRC, signaling.

14. The user equipment of claim 9, wherein the processing unit is further configured to trigger relay selection, when determining that a channel condition between the terminal device and a network device does not meet a preset condition or the terminal device is outside a signal coverage of the network device.

15. The user equipment of any of claims 9 to 14, wherein the processing unit is specifically configured to select a relay for uplink transmission.

16. The user equipment of any of claims 9 to 14, wherein determining whether the service needs uplink transmission comprises:
determining that the service needs uplink transmission when the service is a unicast service; or
determining that the service needs uplink transmission when the service is a multicast service requiring a hybrid automatic repeat request, HARQ, feedback.

17. A terminal, comprising:
a processor;
a memory;
a communication interface; and
one or more programs, stored in the memory and configured to be executed by the processor;
the programs comprising instructions which are operable to execute the operations of the method of any of claims 1 to 8.

18. A chip system, comprising:
at least one processor;
at least one memory; and
an interface circuit;
the memory, a transceiver, and the at least one processor being interconnected through lines;
the at least one memory storing computer programs which, when executed by the processor, are operable to execute the method of any of claims 1 to 8.

19. A network device being configured to support a terminal device to execute the method of any of claims 1 to 8.

20. A computer-readable storage medium storing computer programs which, when run on a user equipment, are operable to execute the method of any of claims 1 to 8.

21. A computer program product comprising a non-transitory computer-readable storage medium, the non-transitory computer-readable storage medium storing computer programs which are operable with a computer to execute the method of any of claims 1 to 8.
